# EUROPÄISCHE PATENTANMELDUNG

(11) **EP 0 691 390 A2**
(43) Veröffentlichungstag der Anmeldung: **10.01.1996**
(21) Anmeldenummer: 95109964.7
(22) Anmeldetag: 27.06.1995
(51) Int. Cl.: C09K 11/02

(54) **Fluoreszenzfarbstoff enthaltende wässrige Dispersionen**

(30) Priorität: 06.07.1994 DE 4423611; 15.10.1994 DE 4436892
(71) Anmelder: BASF AKTIENGESELLSCHAFT, D-67056 Ludwigshafen (DE)
(72) Erfinder: Schlarb, Bernhard, Dr., D-67067 Ludwigshafen (DE); Bankowsky, Heinz-Hilmar, D-67227 Frankenthal (DE); Haremza, Sylke, Dr., D-69151 Neckargemünd (DE)

(57) **Zusammenfassung**

Fluoreszenzfarbstoff enthaltende wäßrige Dispersionen, erhältlich durch
a) Herstellung einer polymeren Verbindung in einem organischen Lösungsmittel,
b) Zusatz eines Fluoreszenzfarbstoffs zu dem organischen Lösungsmittel vor, während oder nach der Herstellung der polymeren Verbindung,
c) anschließende Dispergierung der erhaltenen organischen Lösung oder Dispersion in Wasser und
d) gegebenenfalls Entfernung des organischen Lösungsmittels.

## Beschreibung

Die Erfindung betrifft Fluoreszenzfarbstoff enthaltende wäßrige Dispersionen, erhältlich durch
a) Herstellung einer polymeren Verbindung in einem organischen Lösungsmittel,
b) Zusatz eines Fluoreszenzfarbstoffs zu dem organischen Lösungsmittel vor, während oder nach der Herstellung der polymeren Verbindung,
c) anschließende Dispergierung der erhaltenen organischen Lösung oder Dispersion in Wasser und
d) gegebenenfalls Entfernung des organischen Lösungsmittels.

Weiterhin betrifft die Erfindung ein Verfahren zur Herstellung solcher Dispersionen und die Verwendung der Dispersionen als Beschichtungsmittel.

Aus der EP-A-566 448 sind durch Emulsionspolymerisation hergestellte wäßrige Dispersionen bekannt, denen Fluoreszenzfarbstoffe zugesetzt werden. Die erhaltenen Dispersionen werden als solche für diagnostische Zwecke eingesetzt.

Farbstoffe enthaltende wäßrige Sekundärdispersionen werden in der JP-A-04/1272 beschrieben. Bei Sekundärdispersionen wird das Polymer zunächst in einem organischen Lösungsmittel hergestellt und die erhaltene Lösung in Wasser dispergiert. Der Farbstoff wird gemäß JP-A-04/1272 zur organischen Lösung zugesetzt. Fluoreszenzfarbstoffe sind nicht erwähnt.

Es ist bekannt, thermoplastische Kunststoffe mit Fluoreszenzfarbstoffen auszurüsten und die erhaltenen Kusntstoffteile z.B. als Fluoreszenzkollektoren oder Gewächshausfolien zu verwenden.

Fluoreszenzkollektoren sind im allgemeinen transparente Kunststoffplatten, in die bei der Herstellung fluoreszierende Farbstoffe eingelagert wurden. Die Fluoreszenzstrahlung wird im Inneren dieser Platte an die Kanten gelenkt und dort konzentriert abgestrahlt, z.B. auf eine Solarzelle. Abhängig von der Geometrie der Platte und den verwendeten Substanzen wird so das Licht um das 5- bis 10fache verdichtet.

Durch bei der Herstellung mit Fluoreszenzfarbstoffen ausgerüstete Polymerfolien können je nach Art der Fluoreszenzfarbstoffe einzelne Wellenlängenbereiche gezielt in für das Pflanzenwachstum vorteilhafte Bereiche umgewandelt und diese Folien so als Gewächshausfolien verwendet werden.

Bisher werden demnach Fluoreszenzfarbstoffe bei der Herstellung in das Polymer eingelagert. Demgegenüber böten Fluoreszenzfarbstoffe enthaltende Beschichtungsmittel weitaus größere Variationsmöglichkeiten. Es kann z.B. auch Glas beschichtet werden, und es besteht die Möglichkeit der nachträglichen Beschichtung oder der Erneuerung von Beschichtungen.

Aufgabe der vorliegenden Erfindung waren daher Fluoreszenzfarbstoffe enthaltende Beschichtungsmittel, welche sich auch zur Herstellung von Fluoreszenzkollektoren und Gewächshausfolien eignen.

Demgemäß wurden die oben definierten Dispersionen, ein Verfahren zu ihrer Herstellung und ihre Verwendung als Beschichtungsmittel gefunden.

Mit diesen Dispersionen beschichtete Substrate eignen sich z.B. als Gewächshausfolien oder Fluoreszenzkollektoren. Im letzteren Fall ist es äußerst überraschend, daß mit den Dispersionen beschichtete Kunststoffplatten oder Glasplatten in der gleichen Weise einen Kollektoreffekt an den Kanten zeigen wie Kunststoffplatten, bei denen der Fluoreszenzfarbstoff in der Polymermatrix eingelagert ist.

Die erfindungsgemäßen wäßrigen Dispersionen sind erhältlich durch die oben definierten Verfahrensschritte a) bis d). Im Verfahrensschritt a) wird zunächst eine polymere Verbindung, z.B. ein radikalisch polymerisiertes Polymer (kurz Polymer genannt), ein Polyaddukt oder ein Polykondensat in einem organischen Lösungsmittel hergestellt. Die polymere Verbindung hat vorzugsweise eine Säurezahl von 5 bis 200, besonders bevorzugt 10 bis 150, ganz besonders bevorzugt 10 bis 90 und insbesondere 15 bis 40 mg KOH/g polymerer Verbindung (nach DIN 53 402).

Bei der polymeren Verbindung kann es sich im einzelnen z.B. um einen Polyester, ein Polyamid oder vorzugsweise um ein durch radikalische Polymerisation hergestelltes Polymer handeln.

Geeignete ethylenisch ungesättigte Monomere für die radikalische Polymerisation sind insbesondere sogenannte Hauptmonomere, ausgewählt aus C₁-C₂₀-Alkyl(meth)acrylaten, Vinylestern von bis zu 20 C-Atomen enthaltenden Carbonsäuren, Vinylaromaten mit bis zu 20 C-Atomen, ethylenisch ungesättigten Nitrilen, Vinylhalogeniden und aliphatischen Kohlenwasserstoffen mit 2 bis 8 C-Atomen und 1 oder 2 Doppelbindungen oder deren Gemische.

Als Hauptmonomere zu nennen sind z.B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat und Vinylacetat.

Als vinylaromatische Verbindungen kommen Vinyltoluol, α- und p-Methylstyrol, α-Butylstyrol, 4-n-Butylstyrol, 4-n-Decylstyrol und vorzugsweise Styrol in Betracht.

Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als nicht aromatische Kohlenwasserstoffe mit 2 bis 8 C-Atomen und ein oder zwei olefinischen Doppelbindungen seien Butadien, Isopren und Chloropren, sowie Ethylen, Propylen und Isobutylen genannt.

Die Hauptmonomeren werden auch vorzugsweise im Gemisch eingesetzt.

Vinylaromatische Verbindungen wie Styrol werden z.B. häufig im Gemisch mit C₁-C₂₀-Alkyl(meth)acrylaten, insbesondere mit C₁-C₈-Alkyl(meth)acrylaten, oder nicht aromatischen Kohlenwasserstoffen wie Isopren oder vorzugsweise Butadien eingesetzt.

Besonders bevorzugt sind Alkyl(meth)acrylate, Styrol und deren Gemische als Hauptmonomere.

Vorzugsweise besteht das radikalisch polymerisierte Polymer zu mindestens 40, besonders bevorzugt zu mindestens 60 Gew.-% aus den Hauptmonomeren.

Neben den Hauptmonomeren enthält das Polymer vorzugsweise ethylenisch ungesättigte Monomere mit einer oder mehreren Carbonsäuregruppen, z.B. Acrylsäure, Methacrylsäure, Maleinsäure, Fumarsäure, Maleinsaure- bzw. Fumarsäurehalbester oder Itaconsäure. Der Gehalt dieser Monomeren wird so gewählt, daß das Polymer die oben angegebene Säurezahl hat. Statt der genannten Säuren kann das Polymer auch die entsprechenden Anhydride enthalten, die zu den Säuren verseift werden.

Weitere ethylenisch ungesättigte Monomere sind insbesondere Hydroxylgruppen enthaltende Monomere wie Hydroxyalkyl(meth)acrylate, z.B. Hydroxypropyl- oder Hydroxyethyl(meth)acrylat.

Polymere mit einem Gehalt an Hydroxylgruppen können z.B. mit Melaminharzen oder Polyisocyanaten, insbesondere wasseremulgierbaren Polyisocyanaten vernetzt werden. Der Gehalt der Hydroxylgruppen enthaltenden Monomere wird vorzugsweise so gewählt, daß die OH-Zahl des Polymeren 0 bis 200, besonders bevorzugt 0 bis 150, ganz besonders bevorzugt 0 bis 100 und insbesondere 0 bis 30 mg KOH/g Polymer (DIN 53 240) beträgt. Des weiteren kann das Polymer z.B. auch einen Gehalt an Monomeren mit Carbonylgruppen aufweisen und so z.B. mit Polyhydraziden vernetzbar sein.

Das gewichtsmittlere Molekulargewicht (M_{w}) der polymeren Verbindung beträgt vorzugsweise 20.000 bis 500.000, besonders bevorzugt 50.000 bis 200.000 und ganz besonders bevorzugt 70.000 bis 120.000 (bestimmt durch Gelpermeationschromatographie, mit Polystyrol als Standard).

Als organische Lösungsmittel im Verfahrensschritt a) eignen sich insbesondere solche mit einem Siedepunkt unter 100°C bei 1 bar, bzw. solche die mit Wasser ein Azeotrop mit einem Siedepunkt unter 100°C bei 1 bar bilden, so daß das Lösungsmittel bei Bedarf in Verfahrensschritt d) leicht wieder entfernt werden kann.

Als Lösungsmittel genannt seien z.B. Butanol, Isobutanol, Propanol, Ethanol und Methanol.

Die Polymerisation der ethylenisch ungesättigten Monomeren kann in bekannter Weise rein thermisch oder vorzugsweise in Gegenwart von Initiatoren erfolgen. Als radikalbildende Initiatoren genannt seien z.B. Azobiscarbonsäureamide., Azobiscarbonsäurenitrile, Persäureester oder Peroxide. Die Menge des Initiators beträgt vorzugsweise 0,2 bis 5, besonders bevorzugt 0,5 bis 3 Gew.-%, bezogen auf die Monomeren. Die Polymerisationstemperatur beträgt vorzugszweise 50 bis 150°C, besonders bevorzugt 80 bis 130°C. Gegebenenfalls können auch Regler, z.B. Mercaptoethanol, Tertiärdodecylmercaptan oder Diisopropylxanthogensulfid, vorzugsweise in Mengen von 0 bis 3 Gew.-%, bezogen auf die Monomeren, zugesetzt werden.

Die Herstellung der polymeren Verbindung kann z.B. auch einstufig oder mehrstufig erfolgen. Insbesondere kann z.B. zunächst ein Polymer mit einer hohen Säurezahl und in dessen Gegenwart dann ein Polymer mit einer geringeren Säurezahl (bzw. Säurezahl = 0), wobei vorzugsweise die Gesamtsäurezahl den oben angegebenen Werten entspricht, hergestellt werden. Die Reihenfolge kann auch so sein, daß zunächst das Polymer mit der geringeren Säurezahl hergestellt wird.

Nach Herstellung der polymeren Verbindung wird eine Dispersion oder vorzugsweise Lösung der polymeren Verbindung in dem organischen Lösungsmittel erhalten. Der Feststoffgehalt beträgt vorzugsweise 50 bis 95, insbesondere 60 bis 85 Gew.-%.

Im Verfahrensschritt b) wird der Fluoreszenzfarbstoff zugesetzt. Der Fluoreszenzfarbstoff kann dem organischen Lösungsmittel vor oder während der Herstellung der polymeren Verbindung zugesetzt werden. Vorzugsweise wird der Fluoreszenzfarbstoff nach der Herstellung der polymeren Verbindung der erhaltenen organischen Lösung oder Dispersion zugesetzt. In jedem Fall wird der Fluoreszenzfarbstoff vor der Dispergierung in Wasser zugesetzt. Vorzugsweise handelt es sich um einen in dem organischen Lösungsmittel weitgehend, vorzugsweise vollständig, löslichen Fluoreszenzfarbstoff. In Wasser ist der Fluoreszenzfarbstoff vorzugsweise weitgehend unlöslich, d.h. vorzugsweise zu weniger als 0,1 g/l Wasser bei 20°C löslich. Zur besseren Lösung des Fluoreszenzfarbstoffs in dem organischen Lösungsmittel kann z.B. die Temperatur auf 50 bis 120°C, vorzugsweise 70 bis 105°C erhöht werden.

Geeignete Fluoreszenzfarbstoffe sind z.B. solche der Formel 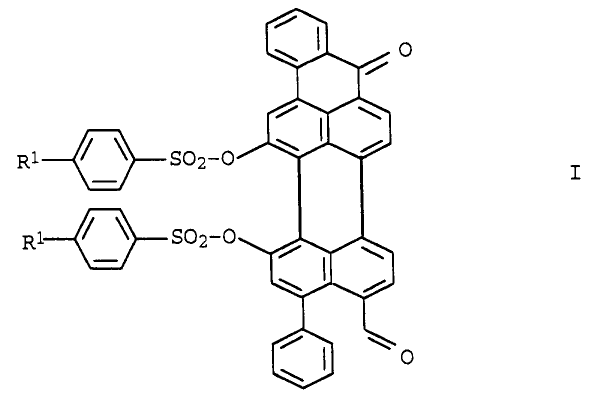
in der R¹ für einen Alkylrest, insbesondere einen C₁-C₁₃-Alkylrest steht, der Formel 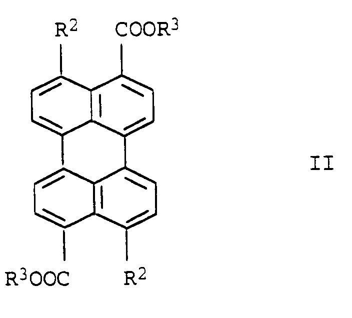
in der R² ein Wasserstoffatom oder eine Cyanogruppe und R³ eine C₁-C₁₁-Alkylgruppe bedeutet, oder der Formel 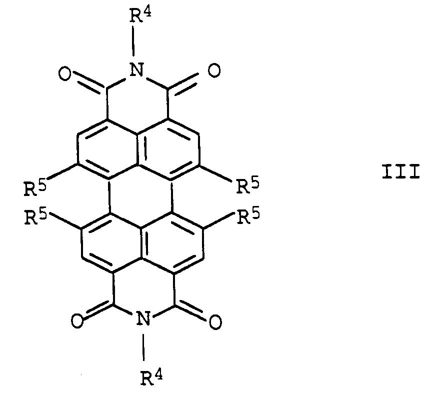
wobei
- R⁴: C₅-C₂₀-Alkyl, das gegebenenfalls durch ein Sauerstoffatom unterbrochen ist, oder Phenyl, das durch C₁-C₁₃-Alkyl oder C₁-C₁₃-Alkoxy ein- oder mehrfach substituiert ist, und
- R⁵: Wasserstoff, Chlor, Phenoxy oder durch Halogen, C₁-C₄-Alkyl oder C₁-C₄-Alkoxy sübstituiertes Phenoxy bedeuten.

Die Menge des Fluoreszenzfarbstoffs beträgt vorzugsweise 0,001 bis 10, insbesondere 0,01 bis 1 und besonders bevorzugt 0,02 bis 0,1 Gew.-%, bezogen auf die polymere Verbindung.

Vor der Dispergierung in Wasser (Verfahrensschritt c)) und vorzugsweise nach der Zugabe des Fluoreszenzfarbstoffs werden Säuregruppen der polymeren Verbindung ganz oder teilweise mit einer geeigneten Base, z.B. Ammoniak oder organischen Aminen, z.B. Triethylamin, neutralisiert.

Zur Dispergierung in Wasser braucht im allgemeinen kein Emulgator oder Schutzkolloid zugesetzt werden. Die erhaltenen Dispersionen sind auch ohne derartige oberflächenaktiven Hilfsmittel stabil.

Der pH-Wert der nach der Dispergierung erhaltenen wäßrigen Dispersion beträgt vorzugsweise 6 bis 10, insbesondere 7 bis 9. Der Feststoffgehalt der wäßrigen Dispersion beträgt vorzugsweise 30 bis 70, insbesondere 40 bis 60 Gew.-%, bezogen auf die Dispersion. Das organische Lösungsmittel kann, z.B. durch Destillation, gegebenenfalls unter vermindertem Druck im gewünschten Ausmaß entfernt werden.

Bevorzugt sind Restgehalte an organischem Lösungsmittel in der Dispersion unter 5, besonders bevorzugt unter 1 Gew.-%.

Die Dispersionen eignen sich als Beschichtungsmittel für unterschiedlichste Substrate, z.B. aus Glas, Kunststoff, Metall, Holz, etc.

Beschichtungen auf transparenten Materialien, z.B. Glas oder transparentem Kunststoff zeigen einen Kollektoreffekt, obwohl der Fluoreszenzfarbstoff nicht wie bisher üblich in dem transparenten Kunststoff selbst eingelagert ist. Der Kollektoreffekt ist daran erkenntlich, daß bei beschichteten Glas- oder Kunststoffplatten das Fluoreszenzlicht mit starker Intensität aus den Kanten der Platten austritt.

Mit der erfindungsgemäßen Dispersion beschichtete Glas- oder Kunststoffteile können daher als Fluoreszenzkollektoren verwendet werden.

Eine weitere Verwendung sind z.B. mit der erfindungsgemäßen Dispersion beschichtete Gewächshausfolien, bei denen der Fluoreszenzfarbstoff Licht bestimmter Wellenlägenbereiche in z.B. für das Pflanzenwachstum förderliche Wellenlängenbereiche (z.B. Umwandlung von grünem Licht in rotes) umwandelt.

Ebenso kann dieser Zweck erreicht werden, wenn Glasteile, insbesondere Glasplatten, mit der erfindungsgemäßen Dispersion beschichtet und für Gewächshäuser verwendet werden.

### Beispiele

### Beispiele 1 und 2

Die Vorlage wurde auf eine Temperatur von 105°C geheizt. Dann wurden 10 g von Zulauf 3 innerhalb von 15 min zudosiert und 30 min weitergerührt. Dann wurde der Rest von Zulauf 1 und 17 g von Zulauf 3 innerhalb von 1 Stunde zudosiert und noch 1 Stunde weitergerührt. Zulauf 2 wurde innerhalb von 4 Stunden und der Rest von Zulauf 3 innerhalb von 5 Stunden zudosiert und anschließend noch 1 Stunde weitergerührt. Zu der Polymerlösung wurde der Fluoreszenzfarbstoff bei 105°C zugegeben und weitergerührt, bis er vollständig aufgelöst war.

Bei einer Temperatur von 70°C wurde mit Zulauf 4 innerhalb von 15 min neutralisiert. Danach wurde durch Einrühren von 1.000 g Wasser innerhalb von 30 min in Wasser dispergiert. Das Isobutanol wurde im Vakuum bei einer Außemtemperatur von 70°C abdestilliert. Da hierbei ein wasserhaltiges Azeotrop abdestilliert, wurde frisches Wasser während der Destillation zudosiert, so daß die Viskosität der Dispersion immer auf gleichem Niveau gehalten wurde.

### Beispiel 3

Die Vorlage wurde auf eine Temperatur von 105°C aufgeheizt. Dann wurden 8 g von Zulauf 3 zugegeben. Der Rest von Zulauf 1 und 9 g von Zulauf 3 wurden dann innerhalb von 1 Stunde und danach 10 g von Zulauf 3 innerhalb von 1 Stunde zudosiert. Dann wurde Zulauf 2 und 120 g von Zulauf 3 in 4 Stunden zudosiert. Anschließend wurde der Rest von Zulauf 3 in 2 Stunden zudosiert und dann noch 1 Stunde weitergerührt. Danach wurde wie oben beschrieben weitergearbeitet.

### Beispiel 4

Die Vorlage wurde auf 105°C geheizt. Dann wurden 15 g Zulauf 3 zudosiert. Dann wurde der Rest von Zulauf 1 und 15 g von Zulauf 3 in 45 min zudosiert und dann 15 min weitergerührt. Danach wurden 135 g von Zulauf 2 und 30 g von Zulauf 3 in 2 Stunden zudosiert und dann 1 Stunde weitergerührt. Der Rest von Zulauf 2 und 130 g von Zulauf 3 wurden dann in 3 Stunden zudosiert, wonach der Rest von Zulauf 3 in 2 Stunden zudosiert wurde. Zuletzt wurde noch 2 Stunden bei 105°C weitergerührt. Dann wurde so weitergearbeitet, wie oben beschrieben.

Die Zusammensetzung der Vorlage und der Zuläufe ist aus Tabelle 1 und die Kenndaten der Dispersion sind aus Tabelle 2 zu entnehmen.

**Tabelle 1**

| Beispiel | 1 | 2 | 3 | 4 |
|---|---|---|---|---|
| Vorlage: | | | | |
| Isobutanol | 170 | 170 | 170 | 170 |
| Zulauf 1 | 180 | 180 | 180 | 180 |

| Zulauf 1: | | | | |
|---|---|---|---|---|
| Acrylsäure | 20 | 20 | 41 | 55 |
| MMA ¹⁾ | 185 | 185 | - | - |
| n-BA ²⁾ | 155 | 155 | 152 | - |
| Styrol | - | - | 107 | 310 |

| Zulauf 2: | | | | |
|---|---|---|---|---|
| MMA | 345 | 345 | 104 | 635 |
| n-BA | 295 | 295 | 348 | - |
| Styrol | - | - | 248 | - |

| Zulauf 3: | | | | |
|---|---|---|---|---|
| t-BPO ³⁾ | 8 | 8 | 24 | 20 |
| Isobutanol | 130 | 130 | 170 | 230 |
| "K 856" ⁴⁾ | 0,2 | 2 | 2 | 0,1 |

| Zulauf 4: | | | | |
|---|---|---|---|---|
| wäßrige 25 Gew.-%ige Ammoniaklösung | 19 | 19 | 40 | 52 |

| | | | | |
|---|---|---|---|---|
| ¹⁾: Methylmethacrylat | | | | |
| ²⁾: n-Butylacrylat | | | | |
| ³⁾: t-Butylperoctoat | | | | |
| ⁴⁾: Fluoreszenzfarbstoff gemäß Formel III (Perylen) | | | | |

**Tabelle 2**

| Beispiel | 1 | 2 | 3 | 4 |
|---|---|---|---|---|
| Farbe | rot | rot | rot | rot |
| Feststoffgehalt % | 41,4 | 41,2 | 38,0 | 46,9 |
| Restgehalt an Isobutanol % | 0,5 | 0,2 | 0,4 | 0,9 |
| Viskosität (mPas) | 640 | 520 | 320 | 200 |
| LD-Wert ^{*)} | 83 | 78 | 79 | 59 |

| | | | | |
|---|---|---|---|---|
| ^{*)} Trübung der Dispersion mit 0,01 Gew.-% Polymergehalt im Verhältnis zu Wasser, bestimmt durch Messung des Photostroms. Der Wert gibt die Lichtdurchlässigkeit in % an. | | | | |

### Anwendungstechnische Prüfungen:

a) Beschichtung von Glasplatten:
   Die Dispersionen (1-3) wurden mit einem Kastenrakel (Fa. Erichsen) auf eine gereinigte Glasplatte aufgezogen. Filmdicke: 100 µm (naß). Nach Trocknung des Films bei Raumtemperatur wurde ein roter, transparenter Film erhalten. Die Kanten der Glasplatte emittieren intensiv rotes Licht.
   Dispersion 4 ergibt einen opaken, violett gefärbten Film. Die Kanten der Glasplatte zeigen eine Intensität an violettem Licht.
b) Herstellung dicker Dispersionsfilme:
   Die Dispersionen (1-3) wurden in Polyethylenformen gegossen, die einen Durchmesser von 7 cm und eine Randhöhe von 3 mm hatten. Nach Trocknung der Dispersionen wurden Filme von einer Dicke von ca. 1,5 mm erhalten. Die Filme sind rot gefärbt, transparent und zeigen an den Rändern ein intensives rotes Leuchten.
c) Beschichtung von Polyester-Folien, Untersuchung der UV-Beständigkeit:
   Die Dispersionen (1-3) wurden mit einem Kastenrakel auf Polyesterfolien aufgezogen (Filmdicke: 24 um (naß)). Nach Trocknung des Films bei Raumtemperatur wurde ein roter, transparenter Film erhalten. Die Kanten der Folie emittieren ein intensiv rotes Licht. Die Folien wurden in einem Xenontestgerät 598 Stunden belichtet und die Lichtechtheit nach der Wollskala visuell beurteilt. Die Prüfung ergab eine Lichtechtheit der Note 5-6.

## Patentansprüche

1. Fluoreszenzfarbstoff enthaltende wäßrige Dispersionen, erhältlich durch
a) Herstellung einer polymeren Verbindung in einem organischen Lösungsmittel,
b) Zusatz eines Fluoreszenzfarbstoffs zu dem organischen Lösungsmittel vor, während oder nach der Herstellung der polymeren Verbindung,
c) anschließende Dispergierung der erhaltenen organischen Lösung oder Dispersion in Wasser und
d) gegebenenfalls Entfernung des organischen Lösungsmittels.

2. Wäßrige Dispersionen gemäß Anspruch 1, wobei die polymere Verbindung eine Säurezahl von 5 bis 200 mg KOH/g aufweist.

3. Wäßrige Dispersion gemäß Anspruch 1 oder 2, wobei in Schritt a) die polymere Verbindung durch radikalische Polymerisation hergestellt wird.

4. Wäßrige Dispersion gemäß Anspruch 3, wobei das erhaltene Polymere zu mehr als 60 Gew.-% aus (Meth)acrylmonomeren, Styrol oder deren Gemische besteht.

5. Wäßrige Dispersion gemäß einem der Ansprüche 1 bis 4, enthaltend 0,001 bis 10 Gew.-% bezogen auf die polymere Verbindung eines Fluoreszenzfarbstoffs.

6. Verfahren zur Herstellung von Fluoreszenzfarbstoff enthaltenden wäßrigen Dispersionen, dadurch gekennzeichnet, daß
a) eine polymere Verbindung in einem organischen Lösungsmittel hergestellt wird,
b) vor, während oder nach der Herstellung der polymeren Verbindung ein Fluoreszenzfarbstoff zugesetzt wird,
c) anschließend die erhaltene organische Lösung oder Dispersion in Wasser dispergiert wird und
d) das organische Lösungsmittel gegebenenfalls entfernt wird.

7. Verwendung von wäßrigen Dispersionen gemäß einem der Ansprüche 1 bis 6 als Beschichtungsmittel.

8. Mit wäßrigen Dispersionen gemäß einem der Ansprüche 1 bis 5 beschichtete Substrate.

9. Mit wäßrigen Dispersionen gemäß einem der Ansprüche 1 bis 5 beschichtete Glas- oder transparente Kunststoffteile.

10. Verwendung von beschichteten Glas- oder Kunststoffteilen gemäß Anspruch 9 als Fluoreszenzkollektoren.

11. Verwendung von mit einer wäßrigen Dispersion gemäß einem der Ansprüche 1 bis 5 beschichteten Kunststoffolien als Gewächshausfolien.

12. Verwendung von beschichteten Glasteilen, insbesondere -platten gemäß Anspruch 9 für Gewächshäuser.
